(19)

Europäisches
Patentamt
European
Patent Office
Office européen
des brevets

(11) **EP 2 073 490 A1**

(12) **EUROPEAN PATENT APPLICATION**

(43) Date of publication:
**24.06.2009 Bulletin 2009/26**

(51) Int Cl.:
***H04L 29/06*** (2006.01)

(21) Application number: **07301717.0**

(22) Date of filing: **20.12.2007**

<table>
<tr><td>

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Alcatel Lucent**
**75008 Paris (FR)**

(72) Inventor: **Christophe, Benoit**
**91300 Massy (FR)**

</td><td>

(74) Representative: **Korakis-Ménager, Sophie**
**Alcatel Lucent**
**Intellectual Property & Standards**
**54, rue La Boétie**
**75008 Paris (FR)**

Remarks:
Amended claims in accordance with Rule 137(2) EPC.

</td></tr>
</table>

(54) **Devices and method for invocation of a sequence of web services by means of a single request based message**

(57)    A method consists, when N web services need to be invoked sequentially for a communication equipment (T1), in generating a dedicated message containing requests relative to these N web services, and in transmitting this dedicated message to a server (S1) in order it analyzes the requests it contains, and then invokes the N web services defined by these requests for this communication equipment (T1).

FIG.1

EP 2 073 490 A1

**Description**

The present invention relates to web service invocation by communication equipments.

One means here by "communication equipment" any type of equipment (or terminal) capable of being connected to a communication network in order to exchange data with another communication equipment or network equipment. So, it can be, for instance, a fixed or wireless or mobile (or cellular) telephone (including smart phone) or a fixed or portable computer or even a personal digital assistant (PDA, including pocket PC), since it is equipped with a communication module connectable to a communication network.

As it is known by the man skilled in the art, in web service technology there is no way to invoke several correlated web services at the same time. So, if N web services must be sequentially invoked to get a result, N requests have to be sent. Moreover, because web services have to be invoked sequentially an asynchronous web service model can not be applied. More, when a result is expected from a sequence of N web services, the time for obtaining this result comprises the time spent for any request and the time spent for responding to any request, which depends notably on the network connections and the equipment capabilities.

This situation may penalize some communication equipments having limited capabilities (notably in terms of bandwidth and processing (CPU)), such as smart phones and pocket PC.

In order to improve the situation it is possible to use an orchestration process model (such as BPEL (Business Process Execution Language) - workflow language). Let us remind that in an orchestration process only one request is sent to an overall process to invoke sequentially N web services, and this overall process calls each of these N web services. So, the equipment has only one request to send, but the overall process will have to generate and send N requests to invoke the N web services, which means that in fact N+1 requests have to be sent. The overall process being implemented by a powerful server having much more capabilities, notably in terms of processor time and/or bandwidth, than a simple equipment, the N calls are performed faster than with this simple equipment. But the time for obtaining the result still depends on the network connections.

It is also possible to ask the web service provider of the equipment user to create an "all in one" dedicated web service for N web services to be sequentially invoked. Such a dedicated web service creation will be powerful because the equipment will have to call only one web service and the server implementing the all in one dedicated web service will locally invoke all the N web services without passing by HTTP and SOAP layers. But, every time the equipment will need to call several web services it will have to ask for creation of a new all in one dedicated web service. This is intrusive from a server point of view because it decreases the reusability of the all in one dedicated web services. Moreover this requires that the web service provider creates hundreds or thousands of all in one dedicated web services.

So the object of this invention is to improve the situation.

For this purpose, the invention provides a first device intended to equip a communication equipment and arranged, when N web services need to be invoked sequentially for its communication equipment, for generating a dedicated message containing requests relative to these N web services, and in ordering to its communication equipment to transmit this dedicated message to a designated server which is capable of analyzing the requests it contains, and then of invoking, if possible locally (i.e. without HTTP request or SOAP message), or else remotely, the N web services that are defined by these requests for the communication equipment.

Such a first device may be arranged for generating dedicated messages that comprise also at least one parameter.

The invention also provides a computer software product comprising a first device such as the one above introduced.

The invention further provides a second device intended to equip a server and arranged, when its server receives a dedicated message containing requests relative to N web services that must be invoked sequentially for a communication equipment, for analyzing the requests it contains in order to allow its server to invoke, if possible locally (i.e. without HTTP request or SOAP message), or else remotely, these N web services defined by the requests for this communication equipment.

Such a second device may be arranged, when each of the N web services is running on its server, to order to its server to invoke every one of these N web services by means of direct programmatic calls defined by dedicated instructions deduced from the request analysis.

Moreover, this second device may be arranged, when at least one of the N web services is not running on its server, to generate dedicated message(s) containing parameter(s) and/or request(s) relative to the web services to be invoked and which are not running on its server, and then to order to its server to invoke i) the web services running on it by means of direct programmatic calls defined by dedicated instructions deduced from the request analysis, and ii) the web services that are not running on it by means of the generated dedicated message(s).

The invention still further provides a computer software product comprising a second device such as the one above introduced.

The invention still further provides a method intended for invoking web services requested by a communication equipment and consisting, when N web services need to be invoked sequentially for a communication equipment, in generating a dedicated message containing requests relative to these N web services, and in transmitting this dedicated message to a server in order it analyzes the requests it contains, and then invokes, if possible locally (i.e. without HTTP request or SOAP message), or else remotely, the N web services that are defined by these requests for this communication equipment.

The method according to the invention may include additional characteristics considered separately or combined, and notably :

- in case where each of the N web services is running on the server, the latter may invoke every one of these N web services by means of direct programmatic calls defined by dedicated instructions deduced from the request analysis;
- in case where at least one of the N web services is not running on the server, the latter may invoke the web services running on it by means of direct programmatic calls defined by dedicated instructions deduced from the request analysis and the web services that are not running on it by means of dedicated message(s) containing parameter(s) and/or request(s) relative to the web services to be invoked;
- some dedicated messages may also comprise at least one parameter.

The invention concerns different types of dedicated message and notably dedicated SOAP messages.

It is reminded that SOAP is a protocol for exchanging XML-based messages over communication networks, normally using HTTP/HTTPS. It allows message transmissions between distant objects, which means that it allows an object to invoke object activities (or methods) that are located into a distant server. The transfer of SOAP messages can be done by means of HTTP or SMTP protocol, for instance.

Other features and advantages of the invention will become apparent on examining the detailed specifications hereafter and the appended drawings, wherein:

- figure 1 schematically and functionally illustrates a communication network to which are coupled three communication equipments (two of them comprising a first device according to the invention), and two servers comprising a second device according to the invention, and
- figure 2 schematically and functionally illustrates an example of main steps to carry out in order to establish a conference call between three communication equipments.

The appended drawings may serve not only to complete the invention, but also to contribute to its definition, if need be.

The invention aims at offering first and second devices, and an associated method, intended for allowing communication equipments, that are connected to at least one communication network, to invoke sequentially web services without having to send several messages.

In the following description it will be considered that the communication equipments (Ti) are smart phones. But the invention is not limited to this type of communication equipment. Indeed, it concerns any type of equipment (or terminal) capable of being connected to a communication network in order to exchange data with another communication equipment or network equipment. So, it may be also a fixed telephone or a fixed or portable computer or even a personal digital assistant (PDA, including pocket PC), since it is equipped with a communication module connectable to a communication network.

Moreover, in the following description it will be considered that the communication equipments (Ti) are connected to the same communication network (CN), of a mobile or cellular type. But the invention is limited neither to this situation, nor to this type of communication network. Indeed, it concerns any type of communication network to which communication equipments (Ti) and servers of web services (Sj) may be coupled directly or indirectly.

More, in the following description it will be considered that the servers of web services (Sj) are connected to the single communication network (CN) onto which the (communication) equipment (Ti) are connected. But they may be connected to other communication network(s) that are coupled to the single communication network (CN).

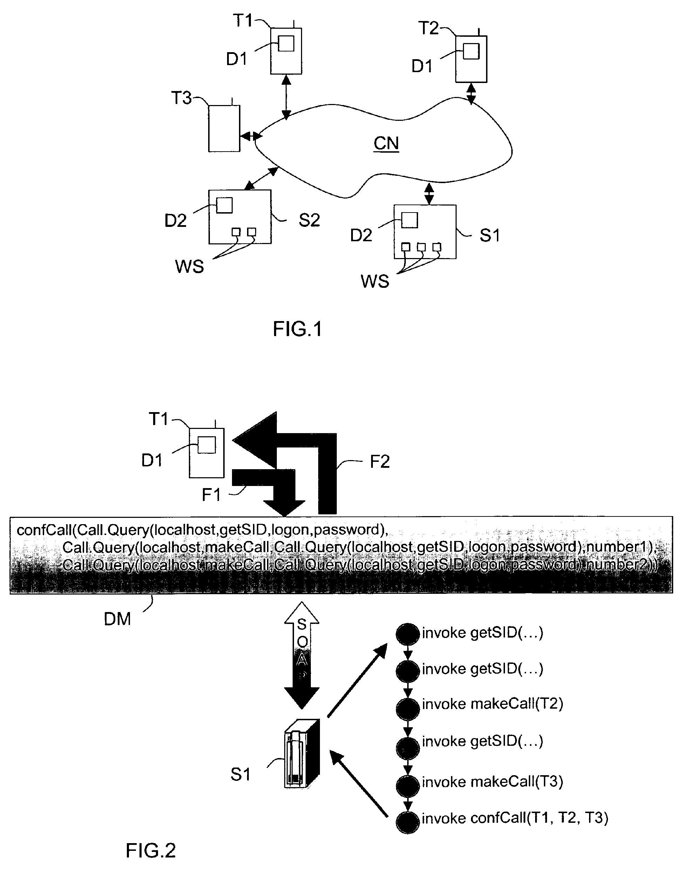

As illustrated in figure 1, the invention aims at offering a method intended for invoking web services WS that are requested by a (communication) equipment Ti (here i = 1 to 3, but it may take any value greater than or equal to 1) and which are running on at least one server Sj of web services (here j = 1 and 2, but it may take any value greater than or equal to 1).

This method has to be implemented each time a communication equipment Ti needs to invoked sequentially N web services in order to get a result (not necessarily one or more values). Such a method may be implemented by means of first devices D1 equipping at least some of the equipments Ti (here T1 and T2) and of second devices D2 equipping the servers of web services Sj (here S1 and S2).

This method consists in generating a dedicated message DM containing at least one request (or query) relative to N (N≥2) web services WS that an equipment Ti wants to invoke sequentially, and in transmitting this dedicated message DM to a server Sj in order it analyzes the request(s) it contains, and then invokes the N web services defined by each request for the equipment Ti.

So, instead the equipment Ti invokes itself sequentially N web services WS by means of N classical messages, it generates only one new dedicated message DM (or "query based service call") requiring invocation of these N web services WS by at least one server Sj.

For instance, the dedicated messages DM are SOAP messages of a new type. It is reminded that a classical SOAP message, corresponding to a web service WS to be invoked by an equipment Ti and running on a server Sj, comprises only parameter(s) that will be used by this server Sj to get a result that is expected by the equipment Ti. So, according to the invention a dedicated SOAP message DM is a SOAP message that comprises one or more requests (or queries) and possibly one or more parameters that could be a classical value (for instance an integer set to 1) or what can be defined as a query-based parameter (i.e. a parameter that is expressed as the result of a web service request, invoked locally or remotely).

But the invention is not limited to this type of message.

To generate dedicated messages DM an equipment Ti needs to be equipped with a first device D1.

Such a first device D1 is preferably made of software modules, at least partly. But it could be also made of electronic circuit(s) or hardware modules, or a combination of hardware and software modules (in this case the first device D1 comprises also a software interface allowing software modules to understand hardware components). In case where it is made of software modules it can be stored in a memory of an equipment Ti or in any computer software product, such as a CD-ROM, for instance, which can be read by a computer or the like. So a first device D1 may be downloaded into an equipment Ti through the communication network CN to which it is connected to, for instance.

Each time a first device D1 has generated a dedicated (SOAP) message DM relative to a sequence of N web services, it orders to the equipment Ti that it equips to transmit this dedicated message DM to a designated server Sj which is capable of analyzing the requests it contains, and then of invoking these N web services (that are defined by these requests) for this equipment Ti.

As mentioned above, a first device D1 may generate dedicated (SOAP) message DM comprising not only request(s) but also parameter(s), if need be.

It is important to note that the server Sj, to which a dedicated (SOAP) message DM is transmitted by an equipment Ti, is not necessarily the (or a) server on which at least one of the N web services WS designated by this dedicated (SOAP) message DM is running on. But this is preferable in order to reduce the time needed for invoking the N web services.

To analyze dedicated messages DM transmitted by an equipment Ti a server Sj needs to be equipped with a second device D2.

Such a second device D2 is preferably made of software modules, at least partly. But it could be also made of electronic circuit(s) or hardware modules, or a combination of hardware and software modules (in this case the second device D2 comprises also a software interface allowing software modules to understand hardware components. In case where it is made of software modules it can be stored in a memory of a server Sj or in any computer software product, such as a CD-ROM, for instance, which can be read by a computer or the like. So a second device D2 may be downloaded into a server Sj through the communication network CN to which it is connected to, for instance.

Each time a server Sj receives a dedicated (SOAP) message DM from an equipment Ti, it transmits it to its second device D2 which analyzes its content and notably the request(s), and possibly parameter(s), it contains and then orders to its server Sj to invoke the N web services that are defined by each request for this equipment Ti.

The way these invocations are performed depends on the server Sj which receives a dedicated (SOAP) message DM. In fact at least two situations may be encountered.

In the first situation, the N web services which are designated in a dedicated (SOAP) message DM are all running on the server Sj which receives this dedicated (SOAP) message DM. This is a very favourable situation in terms of time needed for invoking the N web services. Indeed, when the second device D2 analyzes the content of a received dedicated (SOAP) message DM (and notably the request(s) it contains), it learns that the latter is relative to N web services that are running on its server Sj. So, it deduces dedicated instructions from this request analysis, each of them defining an operation to perform to invoke, or to contribute in part to invocation of, one of the N web services WS. Then the second device D2 orders to its server Sj to invoke every one of the N web services (designated in the dedicated (SOAP) message DM and running on its server Sj) by means of direct programmatic calls defined by the deduced dedicated instructions. It is well known from the man skilled in the art that direct programmatic calls take less time than web service calls (by means of classical SOAP messages), because with programmatic calls there is not need to create a soap message, then to wait for HTTP request transport, then to wait for soap request processing, then to wait for response to be serialized in a soap message, and then to wait for http response transport).

A direct programmatic call means here a creation of a reference (for instance an object (in object oriented programming)). This creation is directly realized through the program as it knows the reference it has to create because it has been passed in the request (for instance the name of the method (or activity) may have been passed).

In the second situation, the N web services which are designated in a dedicated (SOAP) message DM are not only running on the server Sj which receives this dedicated (SOAP) message DM but also on at least one other server Sj'.

When the second device D2 analyzes the content of a received dedicated (SOAP) message DM (and notably the request(s) it contains), it learns that the latter is relative to N web services which are not all running on its server Sj. So, on the one hand it deduces dedicated instructions from this request analysis, each of them defining an operation to perform to invoke, or to contribute in part to invocation of, one of the web services WS that are running on its server Sj, and on the other hand it generates dedicated (SOAP) message(s) containing parameter(s) and/or request(s) relative to the web services WS to be invoked and which are not running on its server Sj. It is important to note that this generated dedicated (SOAP) message may be either a classical (SOAP) message containing only parameter(s), or a dedicated (SOAP) message DM, according to the invention, containing one or more requests and possibly one or more parameters. Then the second device D2 orders to its server Sj to invoke the web services WS (designated in the dedicated (SOAP) message DM and running on its server Sj) by means of direct programmatic calls defined by the deduced dedicated instructions, and to invoke the web services WS that are not running on it by means of the generated dedicated (SOAP) message(s).

Whatever the situation, when the server Sj, which has received the initial dedicated (SOAP) message DM from an equipment Ti, has the result of this initial dedicated (SOAP) message DM, it may transmit a classical (SOAP) message containing said result to this equipment Ti, if need be.

A simple and non limiting example will be now described to illustrate the method that is performed by the first D1 and second D2 devices according to the invention.

In this non limiting example the user of a first equipment T1 wants to initiate a phone conference with the users of second T2 and third T3 equipments. For instance, the first equipment T1 is bound to an enterprise system that allows its user to access to the phone conference service through web services (for instance this enterprise system is an API framework of Alcatel-Lucent).

In order to initiate a phone conference the user of the first equipment T1 needs to follow the steps mentioned hereafter and to which correspond four web services WS:

- obtaining a session Id (or SID) from a server of the enterprise system by means of an authentication process,
- initiating a first call with the user of the second equipment T2,
- initiating a second call with the user of the third equipment T3, and
- initiating the phone conference.

In this non limiting example, it is assumed that:

- all the web services WS that are needed for initiating the phone conference are running on the same server S1,
- the first time the user of the first equipment T1 wants to get a session Id (SID), an authentication phase is triggered, and in case of success a session Id (SID) is provided to him, and
- the following times a session Id (SID) is required, the current session Id (SID) is returned.

As it is schematically illustrated in figure 2, the first equipment T1 has to generate only a single dedicated SOAP message DM (by means of its first device D1) and then to transmit it (F1) to the server S1 on which the N concerned web services WS are running on.

This dedicated SOAP message DM may be expressed has mentioned hereafter:

    confCall(Call.Query(localhost, getSID, logon, password),

        Call.Query(localhost, makeCall, CallQuery(localhost, getSID, logon, password), number1),
        Call.Query(localhost, makeCall, CallQuery(localhost, getSID, logon, password), number2)),

where:

- "confCall" is an instruction defining a phone call (web service) to initiate,
- "Call.Query" is a request (or query) relative to invocation of a web service,
- "localhost" designates the server Sj on which the concerned web service is running,
- "getSID" is an instruction for obtaining a session Id (or SID) during the authentication process,
- "logon" is a first confidential information of the first terminal T1 that is used during the authentication process,
- "password" is a second confidential information of the first terminal T1 that is used during the authentication process,
- "makeCall" is an instruction for initiating a call with an equipment Ti,
- "numberk" designates the equipment Tk (here k = 2 or 3) with which a call must be initiated.

The request "Call.Query" may be expressed has follows, for instance: Call.Query("URL of web service", "name of web service", "parameter 1 ", "parameter 2",..., "parameter M"), where "URL of web service" (or "localhost") designates the address of the server Sj where the considered web service is running on.

If the N web services are running on the same server S1, the "URL of web service" field is unused by server S1. If the N web services are not running on the same server S1, a classical web service call is performed by the server S1 (by means of a classical SOAP message) to get the relevant result (the call being made from the server S1 to another server S2, with more capabilities (bandwidth, CPU) than the equipment T1).

It is important to note that a parameter (1 to M) that may be contained into a request ("Call.Query") is a simple parameter (string or integer, for instance) or the result of another request ("Call.Query").

When the server S1 receives the dedicated SOAP message DM, it transmits it to its second device D2 which analyzes its content (and notably the requests it contains). The N web services WS designated in this dedicated SOAP message DM running on the server S1, the second device D2 deduces six dedicated instructions defining operations to perform sequentially in order to invoke the N web services WS.

In the present example these six dedicated instructions are:

- "getSID(...)" to get a session Id (SID) for the required phone call,
- "getSID(...)" to recover the session Id (SID) that makeCall(T2) could need,
- "makeCall(T2)" to initiate a phone call with the second equipment T2,
- "getSID(...)"to recover the session Id (SID) that makeCall(T3) could need,
- "makeCall(T3)" to initiate a phone call with the third equipment T3, and
- "confCall" to initiate the phone conference between the first T1, second T2 and third T3 equipments.

After having deduced these six dedicated instructions the second device D2 orders to its server Sj to invoke every one of the N web services (designated in the received dedicated SOAP message DM) by means of direct programmatic calls defined by the six deduced dedicated instructions.

When the last web service WS ("confCall") has been invoked, the server S1 transmits a classical SOAP message (F2) to the first equipment T1 to inform it of the result of the web service invocations, and the phone conference can start.

To understand the interest of the invention in terms of time reduction for obtaining a result corresponding to four (N=4) sequentially invoked web services ("getSID", "makeCall(T2)", "makeCall(T3)" and "confCall"), one will now compare the time needed by the method according to the invention (M3) with the time needed by two methods of the art (M1 (classical web service by means of a sequence of SOAP messages) and M2 (classical orchestration process model)).

Let us assumed the following conventions :

- $T_d$ = time for an instruction call on equipment T1,
- $T_s$ = time for an instruction call on server S1, $T_d >> T_s$,
- $N_0$ : Number of instruction calls to make a soap packet,
- $N_1$ : Number of instruction calls to send a SOAP message,
- $N_2$ : Number of instruction calls to deserialize a SOAP message,
- $N_3$ : Number of instruction calls to process a SOAP message,
- $N_4$ : Number of instruction calls to serialize a SOAP response,
- $N_5$ : Number of instruction calls to send a SOAP response,
- $N_6$ Number of instruction calls to deserialize a SOAP response,
- $N_7$ : Number of instruction calls to make a direct programmatic call.

Usually $N_0$ , $N_2$ , $N_4$ and $N_6$ are really larger than $N_1$, $N_3$, $N_5$ and $N_7$ because the XML Layers have in charge, notably, loading of the structure in memory, parsing of this structure and creating of appropriate object(s) according to node value(s) in XML structure. Here $N_7$ is much lower than $N_1$, $N_3$ and $N_5$ because one makes a direct programmatic call into the program but not a web service call.

The time T(M1) needed by the first method (classical web service by means of a sequence of SOAP messages) to invoke sequentially 4 web services WS corresponds to the time needed:

- for generating a first classical SOAP message in the first equipment T1 to invoke the first web service, then transmitting this first SOAP message to a server S1, and then transmitting the result of the first invocation from the server S1 to the first equipment T1,
- for generating a second classical SOAP message in the first equipment T1 to invoke the second web service, then transmitting this second SOAP message to the server S1, and then transmitting the result of the second invocation from the server S1 to the first equipment T1,

- for generating a third classical SOAP message in the first equipment T1 to invoke the third web service, then transmitting this third SOAP message to the server S1, and then transmitting the result of the third invocation from the server S1 to the first equipment T1, and
- for generating a fourth classical SOAP message in the first equipment T1 to invoke the fourth web service, then transmitting this fourth SOAP message to the server S1, and then transmitting the result of the fourth invocation from the server S1 to the first equipment T1.

This time T(M1) can be defined by the following formula:

T(M1) = 4*(Time to make a SOAP packet + Time to send a SOAP message + Time to deserialize a SOAP packet + Time to process the SOAP message + Time to serialize a SOAP response + Time to send the SOAP response + Time to deserialize the SOAP response).

So, $T(M1) = 4*(N_0*T_d + N_1*T_d + N_2*T_s + N_3*T_s + N_4*T_s + N_5*T_s + N_6*T_d)$, which can be approximated by $T(M1) \approx 4*(N_0*T_d + N_1*T_d + N_6*T_d)$.

The time T(M2) needed by the second method (classical orchestration process model) to invoke sequentially 4 web services WS corresponds to the time needed for generating a classical SOAP message in the first equipment T1, then transmitting this SOAP message to a server S1, then for invocation of N=4 web services (by means of four SOAP messages) by the server S1, and then for transmitting the result of the four invocations from the server S1 to the first equipment T1. This time T(M2) can be defined by the following formula:

T(M2) = 1*(Time to make a SOAP packet + Time to send a SOAP message + Time to deserialize the SOAP packet + Time to process the SOAP message + Time to serialize a SOAP response + Time to send the SOAP response + Time to deserialize the SOAP response) + 4*(Time to make a SOAP packet + Time to send a SOAP message + Time to deserialize the SOAP packet + Time to process the SOAP message + Time to serialize a SOAP response + Time to send the SOAP response + Time to deserialize the SOAP response).

So, $T(M2) = 1*(N_0*T_d + N_1*T_d + N_2*T_s + N_3*T_s + N_4*T_s + N_5*T_s + N_6*T_d) + 4*(N_0*T_s + N_1*T_s + N_2*T_s + N_3*T_s + N_4*T_s + N_5*T_s + N_6*T_s)$, which can be approximated by $T(M2) \approx 1*(N_0*T_d + N_1*T_d + N_6*T_d) + 4 T_s*(N_0 + N_1 + N_2 + N_3 + N_4 + N_5 + N_6) \approx 1*(N_0*T_d + N_1*T_d + N_6*T_d) + 16 T_s*N_0$.

The time T(M3) needed by the third method (according to the invention) to invoke sequentially 4 web services can be defined by the following formula:

T(M3) = 1*(Time to make a SOAP packet + Time to send a dedicated SOAP message DM + Time to deserialize the SOAP packet + Time to process the dedicated SOAP message DM + Time to serialize a SOAP response + Time to send the SOAP response + Time to deserialize the SOAP response) + 6*(Time to process a direct programmatic call).

So, $T(M3) = 1*(N_0*T_d + N_1*T_d + N_2*T_s + N_3*T_s + N_4*T_s + N_5*T_s + N_6*T_d) + 6*(N_7*T_s)$, which can be approximated by $T(M3) \approx 1*(N_0*T_d + N_1*T_d + N_6*T_d) + 6 T_s (N_7)$.

If one compares T(M3) with T(M1) and T(M2), one gets T(M3) < T(M2) < T(M1) because of the fact that $T_s \ll T_d$ and $N_7 \ll N_0$, which means that the third method according to the invention increases the application responsiveness.

The invention offers several advantages, and notably:

- an increase of the responsiveness of the applications,
- an easier integration of applications based on web service(s) into communication equipments,
- an implementation that is easier to set than in the case of an orchestration method, because there is no need to be an orchestration designer knowing a workflow language such as BPEL and there is no need to install BPEL engine on server(s),
- an updating that is easier than in a classical web service approach, because the code written by the client is more lighter than in a classical web service approach,
- no intrusiveness from a server point of view, because there is no need to add an "all in one" service on the server (s) each time an application need several web service calls.

The invention is not limited to the embodiments of method, first device and second device described above, only as examples, but it encompasses all alternative embodiments which may be considered by one skilled in the art within the scope of the claims hereafter.

## Claims

1. Device (D1) for a communication equipment (Ti) needing to invoke web services, **characterized in that** it is arranged, when N web services need to be invoked sequentially, for generating a dedicated message containing requests relative to said N web services, and for ordering to said communication equipment (Ti) to transmit said dedicated message to a designated server (Sj) capable of analyzing the requests it contains, and then of invoking said N web services defined by said requests for said communication equipment (MS).

2. Device according to claim 1, **characterized in that** it is arranged for generating dedicated messages comprising also at least one parameter.

3. Computer software product, **characterized in that** it comprises a device (D1) according to one of the preceding claims.

4. Device (D2) for a server (SS), **characterized in that** it is arranged, when said server (Sj) receives a dedicated message containing requests relative to N web services that must be invoked sequentially for a communication equipment (Ti), for analyzing said requests it contains to order to said server (Sj) to invoke said N web services defined by said requests for said communication equipment (Ti).

5. Device according to claim 4, **characterized in that** it is arranged, when each of said N web services is running on said server (Sj), to order to said server (Sj) to invoke every one of said N web services by means of direct programmatic calls defined by dedicated instructions deduced from said request analysis.

6. Device according to one of claims 4 and 5, **characterized in that** it is arranged, when at least one of said N web services is not running on said server (Sj), to generate dedicated message(s) containing parameter(s) and/or request (s) relative to said web services to be invoked and which are not running on said server (Sj), and then to order to said server (Sj) to invoke i) the web services running on it by means of direct programmatic calls defined by dedicated instructions deduced from said request analysis, and ii) the web services that are not running on it by means of said generated dedicated message(s).

7. Computer software product, **characterized in that** it comprises a device (D2) according to one of claims 4 to 6.

8. Method for invoking web services requested by a communication equipment (Ti), **characterized in that** it consists, when N web services need to be invoked sequentially for a communication equipment (Ti), in generating a dedicated message containing requests relative to said N web services, and in transmitting said dedicated message to a server (Sj) in order it analyzes said requests it contains, and then invokes said N web services defined by said requests for said communication equipment (Ti).

9. Method according to claim 8, **characterized in that**, in case where each of said N web services is running on said server (Sj), the latter (Sj) invokes every one of said N web services by means of direct programmatic calls defined by dedicated instructions deduced from said request analysis.

10. Method according to one of claims 8 and 9, **characterized in that**, in case where at least one of said N web services is not running on said server (Sj), the latter (Sj) invokes the web services running on it by means of direct programmatic calls defined by dedicated instructions deduced from said request analysis and the web services that are not running on it by means of dedicated message(s) containing parameter(s) and/or request(s) relative to said web services to be invoked.

11. Method according to one of claims 8 to 10, **characterized in that** some dedicated messages also comprises at least one parameter.

12. Use of said devices (D1, D2), computer software products and method according to one of the preceding claims, for dedicated messages of the SOAP type.


**Amended claims in accordance with Rule 137(2) EPC.**

1. Davice(D1)for a communication equipment (Ti) needing to invoke web services, **characterized in that** it is arranged, when N web services need to be invoKed sequentially, for generating a dedicated message containing requests relative to said N web services, and for ordering to said communication equipment (Ti) to transmit said dedicated message to a designated server (Sj) capable i) of analyzing the requests it contains and then ii) of invoking said N web services defined by said requests for said communication equipment (MS).

2. Device according to claim, 1, **characterized in that** it is arranged for generating dedicated messages comprising also at least one parameter.

3. Computer .software product, **characterized in that** it comprises a device (D1) according to one of the preceding claims,

4. Device (D2) for a server (Sj), **characterized in that** it is arranged, when said server (Sj) receives a dedicated message containing requests relative to N web services that must be invoked sequentially for a communication equipment (Ti), for analyzing said requests contained into said received dedicated message in order to order to said server (Sj) to invoke said N web services defined by said requests for said communication equipment (Ti).

5. Device according to claim 4, **characterized in that** it is arranged, when each of said N web services is running on said server (Sj), to order to said server (Sj) to invoke every one of said N web services by means of direct programmatic calls defined by dedicated instructions deduced from said request analysis.

6. Device according to one of claims 4 and 5, **characterized in that** it is arranged, when at least one of said N web services is not running on said server (Sj), to generate dedicated, message(s) containing parameter(s) and/or request (s) relative to said web services to be invoked and which are not running on said server (Sj), and then to order to said server (Sj) to invoke i) the web services running on it by means of direct programmatic calls defined by dedicated instructions deduced from said request analysis, and ii) the web services that are not running on it by means of said generated dedicated message(s).

7. Computer software product, **characterized in that** it comprises a device (D2) according to one of claims 4 to 6.

8. Method for invoking web services requested by a communication equipment (Ti), **characterized in that** it consists, when N web services need to be invoked sequentially for a communication equipment (Ti), in generating a dedicated message containing requests relative to said N web services, and in transmitting said dedicated message to a server (Sj) in order it analyzes said requests it contains, and then invokes said N web services defined by said requests for said communication equipment (Ti),

9. Method according to claim 8, **characterized in that**, in case where each of said N web services is running on said server (Sj), the latter (Sj) invokes every one of said N web services by means of direct programmatic calls defined by dedicated instructions deduced from said request analysis.

**10.** Method according to one of claims 8 and 9, **characterized in that**, in case where at least one of said N web services is not running on said server (Sj), the latter (Sj) invokes the web services running on it by means of direct programmatic calls defined by dedicated instructions deduced from said request analysis and the web services that are not running on it by means of dedicated message(s) containing parameter(s) and/or request(s) relative to said web services to be invoked.

**11.** Method according to one of claims 8 to 10, **characterized in that** some dedicated messages also comprises at least one parameter.

**12.** Use of said devices (D1. D2), computer software products and method according to one of the preceding claims, for dedicated messages of the SOAP type.

FIG.1

confCall(Call.Query(localhost,getSID,logon,password),
    Call.Query(localhost,makeCall,Call.Query(localhost,getSID,logon,password),number1),
    Call.Query(localhost,makeCall,Call.Query(localhost,getSID,logon,password),number2))

DM

invoke getSID(...)
invoke getSID(...)
invoke makeCall(T2)
invoke getSID(...)
invoke makeCall(T3)
invoke confCall(T1, T2, T3)

FIG.2

EP 2 073 490 A1

**European Patent Office**

**EUROPEAN SEARCH REPORT**

Application Number

EP 07 30 1717

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/133541 A1 (STURTEVANT JOSEPH C [US] ET AL) 19 September 2002 (2002-09-19) * abstract * * paragraphs [0003] - [0008] * * paragraphs [0018] - [0037]; figures 1-6 * | 1-12 | INV. H04L29/06 |
| X | US 2007/266159 A1 (DOPPELHAMER JENS [DE] ET AL) 15 November 2007 (2007-11-15) * abstract * * paragraphs [0009] - [0023] * * paragraphs [0028] - [0047]; figures 1-3 * | 1-12 | |
| X | EP 1 569 418 A (RES IN MOTION LTD [CA]) 31 August 2005 (2005-08-31) * abstract * * paragraphs [0005] - [0012] * * paragraphs [0051] - [0097]; figures 4-7 * | 1-12 | |

TECHNICAL FIELDS SEARCHED (IPC)

H04L

The present search report has been drawn up for all claims

| Place of search | Date of completion of the search | Examiner |
|---|---|---|
| The Hague | 3 July 2008 | Gavriliu, Bogdan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 07 30 1717

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2008

| Patent document cited in search report | | Publication date | Patent family member(s) | | Publication date |
|---|---|---|---|---|---|
| US 2002133541 | A1 | 19-09-2002 | NONE | | |
| US 2007266159 | A1 | 15-11-2007 | DE 102004004345 | A1 | 18-08-2005 |
| | | | WO 2005074234 | A1 | 11-08-2005 |
| EP 1569418 | A | 31-08-2005 | CA 2498375 | A1 | 26-08-2005 |
| | | | CN 1947404 | A | 11-04-2007 |
| | | | WO 2005083983 | A2 | 09-09-2005 |

EPO FORM P0459

For more details about this annex : see Official Journal of the European Patent Office, No. 12/82